# EUROPÄISCHE PATENTSCHRIFT

(11) **EP 1 894 755 B1**
(45) Veröffentlichungstag und Bekanntmachung des Hinweises auf die Patenterteilung: **23.12.2009**
(21) Anmeldenummer: 07024573.3
(22) Anmeldetag: 24.01.2007
(51) Int. Cl.: B60G 17/016, B60G 21/055

(54) **Fahrwerksanordnung**
Chassis assembly
Ensemble chassis

(30) Priorität: 23.02.2006 DE 102006008995; 14.03.2006 DE 102006012110
(43) Veröffentlichungstag der Anmeldung: 05.03.2008
(62) Teilanmeldung aus: 07001433.7
(73) Patentinhaber: Benteler Automobiltechnik GmbH, 33102 Paderborn (DE)
(72) Erfinder: Zuber, Armin, Dr., 74909 Meckesheim (DE)
(74) Vertreter: Griepenstroh, Jörg

(56) Entgegenhaltungen:
- EP-B1- 1 030 790
- FR-A- 1 489 223
- JP-A- 62 131 812

## Beschreibung

Die Erfindung betrifft eine Fahrwerksanordnung mit einem Stabilisator gemäß dem Oberbegriff von Patentanspruch 1.

In Kraftfahrzeugen werden Stabilisatoren zur Kompensation der Wankneigung des Fahrzeugs aufgrund der bei einer Kurvenfahrt auftretenden Querbeschleunigung verbaut. Ein Stabilisator ist jeweils einer Fahrzeugachse zugeordnet, wobei in der Regel beide Achsen mit einem Stabilisator ausgerüstet sind. Durch die Stabilisatoren werden dem Wankmoment entgegen gerichtete Abstützmomente in Radträgereinheiten eingeleitet.

In der einfachsten Ausführungsform besteht ein Stabilisator aus einer einteilig ausgebildeten U-förmigen Metallstange mit einem torsionsweichen Mittelteil und sich an den Mittelteil anschließenden Stabilisatorschenkeln. Der Mittelteil erstreckt sich dabei in einer Querrichtung zur Fahrzeuglängsachse und ist gegenüber dem Fahrzeugaufbau oder einem Fahrschemel, d.h. einem Hilfsrahmen, der Fahrwerksanordnung über zwei Stabilisatorlager abgestützt. An den freien Enden der Stabilisatorschenkel befinden sich die Stabilisatoranbindungen mit denen der Stabilisator an den angrenzenden Radträgereinheiten befestigt ist.

Es ist bekannt, Stabilisatoren mit Aktuatoren auszurüsten, um das Fahrwerksverhalten aktiv zu beeinflussen. So werden beispielsweise hydraulische Kolben/Zylinder-Einheiten zwischen den Stabilisatoranbindungen und den Radträgereinheiten eingebaut. Durch Betätigung der Kolben/Zylinder-Einheiten kann die Wirkung des Stabilisators verstärkt oder abgeschwächt werden. Zudem kann durch beidseitiges und gleichsinniges Betätigen der Aktuatoren eine Niveauregulierung realisiert werden.

Andere Stabilisatorbauformen sehen eine mittige Teilung des Stabilisators und die Anordnung eines Elektromotors als Kupplung oder Bremsvorrichtung zwischen den Stabilisatorabschnitten vor. Mit diesen Vorrichtungen kann, soweit der Elektromotor geeignet abgestützt ist, jede Stabilisatorhälfte individuell oder im Gegensatz zur anderen Hälfte verdreht werden.

Nachteilig an all diesen Ausführungsformen ist jedoch, dass sie konstruktiv sehr aufwendig sind. Es wird relativ viel Energie benötigt, um die Regelungsleistung zu bewirken. Zudem sind die im Einsatz befindlichen hydraulischen Aktuatoren und die Elektromotoren träge, so dass sie sich nicht uneingeschränkt eignen, Aufbauschwingungen in Abhängigkeit vom Schwingungszyklus zu beeinflussen.

Durch die EP 1 030 790 B1 ist ein System und ein Verfahren zur Wankstabilisierung von Fahrzeugen im Stand der Technik bekannt. Das System umfasst einen Stabilisator, der in zwei Stabilisatorhälften geteilt ist. Zwischen den Stabilisatorhälften ist ein Schwenkantrieb angeordnet. Der Schwenkantrieb weist einen Elektromotor und eine Bremse auf. Die Stabilisatorhälften sind über ein dreistufiges Planetengetriebe miteinander gekoppelt.

Die JP 62131812 beschreibt einen Stabilisator für ein Fahrzeug, bei dem an einem Torsionsstab zwei Scheibenbremsen angebracht sind. Die Scheibenbremsen sind kreisringstückförmig.

In der FR 1 489 223 werden Hilfsaggregate für eine Radaufhängung beschrieben. An einem Stabilisator sind Hebel angeordnet, die über Kolben/Zylinder-Einheiten betätigt werden können. Es ist vorgesehen, ein oder zwei solcher Kolben/Zylindereinheiten am Stabilisator anzuordnen.

Der Erfindung liegt ausgehend vom Stand der Technik die Aufgabe zugrunde, eine verbesserte und vereinfachte Fahrwerksanordnung mit einem Stabilisator zu schaffen, die eine gezielte Veränderung der Rollrate und/oder der Aufbauschwingung ermöglicht.

Die Lösung dieser Aufgabe besteht in einer Fahrwerksanordnung mit einem Stabilisator gemäß den Merkmalen von Patentanspruch 1.

Die Fahrwerksanordnung weist einen Stabilisator auf, der mittig in einen ersten Stabilisatorabschnitt und einen zweiten Stabilisatorabschnitt geteilt ist, wobei die Stabilisatorabschnitte durch Mittel zum Beeinflussen der gegenseitigen Verdrehbarkeit der Stabilisatorabschnitte miteinander gekoppelt sind und jeder Stabilisatorabschnitt über ein Stabilisatorlager gegenüber einem Fahrzeugaufbau abgestützt ist.

Wesentlich an dieser Lösung der Aufgabe ist, dass zusätzlich zu den Mitteln zum Beeinflussen der gegenseitigen Verdrehbarkeit der Stabilisatorabschnitte an jedem Stabilisatorabschnitt eine Bremsvorrichtung befestigt ist, durch welche die Tordierbarkeit des jeweiligen Stabilisatorabschnitts beeinflussbar ist.

Die Lösung zeichnet sich zudem dadurch aus, dass die Aufbauschwingungen besonders effektiv gedämpft werden.

Vorteilhafte Ausführungsformen und Weiterbildungen sind Gegenstand der abhängigen Ansprüche 2 bis 24.

Es ist vorgesehen, die Bremsvorrichtungen jeweils zwischen einem Stabilisatorlager und einem angrenzenden Stabilisatorschenkel anzuordnen. Diese Lösung hat den Vorteil, dass der Abstand zwischen den Bremsvorrichtungen und dem Stabilisatorschenkel kurz ist.

Alternativ können die Bremsvorrichtungen jeweils zwischen einem Stabilisatorlager und den Mitteln zum Beeinflussen der gegenseitigen Verdrehbarkeit der Stabilisatorabschnitte angeordnet sein. Diese Ausführungsform nutzt den zwischen den Stabilisatorlagem zur Verfügung stehenden Bauraum besser aus.

Gemäß einer vorteilhaften Ausführungsform ist zumindest eine Bremsvorrichtung eine Scheibenbremse. Mit einer Scheibenbremse können besonders einfach und kostengünstig hohe Bremsmomente in den Stabilisator eingeleitet werden.

Zumindest eine Scheibenbremse weist eine Bremsscheibe auf, die lösbar am Mittelteil befestigt ist. Eine solche Bremsscheibe kann bei Verschleiß einfach ersetzt werden.

Die Bremsscheibe ist zudem in mehreren um einen Winkel α in Umfangsrichtung der Bremsscheibe verdrehten Positionen am Mittelteil befestigbar. Da die Abnutzung der Bremsscheibe nur in einem eng begrenzten Bremsbereich erfolgt, kann durch Verdrehung, d.h. Umsetzen der Bremsscheibe noch unbenutzter Bereich aktiviert werden. Eine vollständige Demontage der Bremsvorrichtung und/oder ein Austausch der Bremsscheibe sind nicht erforderlich.

Die Bremsscheibe kann einen als Kreisringstück ausgeführten Bremsbereich aufweisen. Dieses Kreisringstück ist dann umfangsseitig an einer Nabe befestigt. Diese Ausführungsform ist besonders gewichtsoptimiert und kompakt.

Als besonders vorteilhaft wird es angesehen, wenn die Bremsvorrichtungen unabhängig voneinander betätigbar sind. Dies ermöglicht eine individuelle Regelung der Abstützmomente für jede Fahrzeugseite.

Als vorteilhaft wird es weiterhin angesehen, dass zumindest eine Bremsvorrichtung zwischen einem drehfesten Zustand und einem vollständig entkoppelten Zustand stufenlos schaltbar ist. Mithin lässt sich die Charakteristik der Wankstabilisierung beispielsweise im Rahmen eines analogen Regelkreises regeln.

Alternativ ist vorgesehen, dass zumindest eine Bremsvorrichtung zwischen einem drehfesten Zustand und einem vollständig entkoppelten Zustand in mehreren Stufen schaltbar ist. Hierdurch wird die Steuerung der Fahrwerksanordnung erheblich vereinfacht.

Zumindest eine Bremsvorrichtung kann hydraulisch oder elektromechanisch betätigbar sein. Die hydraulische Ausführungsform ermöglicht die Übertragung hoher Bremskräfte, während eine elektromechanische Betätigungsvorrichtung kompakter ist.

Gemäß einer weiteren Ausführungsform kann eine Bremsvorrichtung auch eine Wirbelstrombremse sein. Hierbei wird in die Bremsscheibe ein Magnetfeld induziert, das der Drehrichtung der Bremsscheibe entgegenwirkt. Wirbelstrombremsen sind praktisch verschleißfrei.

Zumindest eine Bremsvorrichtung ist gegenüber einem Fahrzeugaufbau abgestützt. Dies ermöglicht eine direkte Krafteinleitung in den Fahrzeugaufbau. Alternativ kann eine Bremsvorrichtung gegenüber einem Fahrschemel abgestützt sein. Die Fahrwerksanordnung kann dann mit den erfindungsgemäßen Bremsvorrichtungen als Baugruppe vorgefertigt sein und im Rahmen der Endmontage robotergesteuert unter einem Fahrzeugaufbau montiert werden.

Vorteilhafterweise ist ein Steuergerät vorgesehen, das mit einer Bremsvorrichtung und/oder den Mitteln zum Beeinflussen der gegenseitigen Verdrehbarkeit der Stabilisatorabschnitte gekoppelt ist. Das Steuergerät ermöglicht eine dynamische Regelung der Bremsvorrichtung. Das Steuergerät kann dazu mikroprozessorgesteuert sein und durch entsprechende Software an unterschiedlichen Fahrzeugtypen und Fahrsituationen bedarfsgerecht angepasst sein.

Als besonders vorteilhaft wird es angesehen, wenn das Steuergerät durch den Fahrer eines mit der Fahrwerksanordnung ausgestatteten Kraftfahrzeugs einstellbar ist. Mithin ist die Fahrwerkscharakteristik vom Fahrer selbst vor und während der Fahrt beeinflussbar, so dass sie sich beispielsweise zwischen den Stufen sportlich und komfortabel schalten lässt.

Das Steuergerät ist mit einer Sensorik gekoppelt. Die Sensorik ermöglicht es, einen geschlossenen Regelkreis aufzubauen, durch den eine effiziente Regelung der Fahrwerksanordnung ermöglicht wird.

Vorteilhafterweise weist die Sensorik einen Beschleunigungssensor auf. Dieser Beschleunigungssensor kann zur Erfassung der Querbeschleunigung und damit der Wankneigung vorgesehen sein. Darüber hinaus ist es gemäß einer weiteren Ausführungsform vorgesehen, mehrere Beschleunigungssensoren vorzusehen, die Beschleunigungen in unterschiedliche Wirkrichtungen erfassen. Somit können neben der Querbeschleunigung weitere Beschleunigungsvektoren, insbesondere in Fahrtrichtung, erfasst werden.

Die Sensorik umfasst des Weiteren einen Geschwindigkeitssensor. Mit dem Geschwindigkeitssensor wird eine geschwindigkeitsabhängige Regelung der Fahrwerksanordnung realisiert.

Die Sensorik ist zudem mit einem Fahrbahnzustandssensor ausgestattet. Mit dem Fahrbahnzustandssensor ist der Fahrbahnzustand insbesondere in Bezug auf Oberflächentemperatur erfassbar.

Zweckmäßigweise ist zumindest an einem Radträger ein Radträgereinfederungssensor angeordnet. Vorteilhafterweise ist jedem Radträger ein Radträgereinfederungssensor zugeordnet. Mittels der Radträgereinfederungssensoren ist der Einfederungszustand des Stabilisators dynamisch erfassbar.

Schließlich weist die Sensorik Mittel zur Erfassung meteorologischer Daten auf. Als meteorologische Daten werden im Rahmen dieser Erfindung die Außentemperatur und z.B. das Vorhandensein von Regen und seine Stärke verstanden.

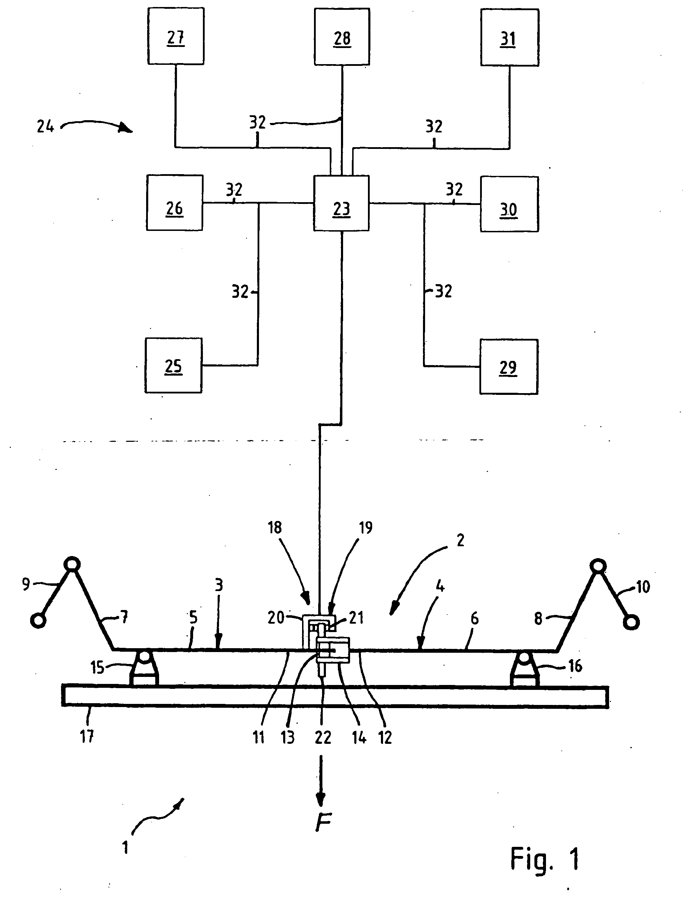

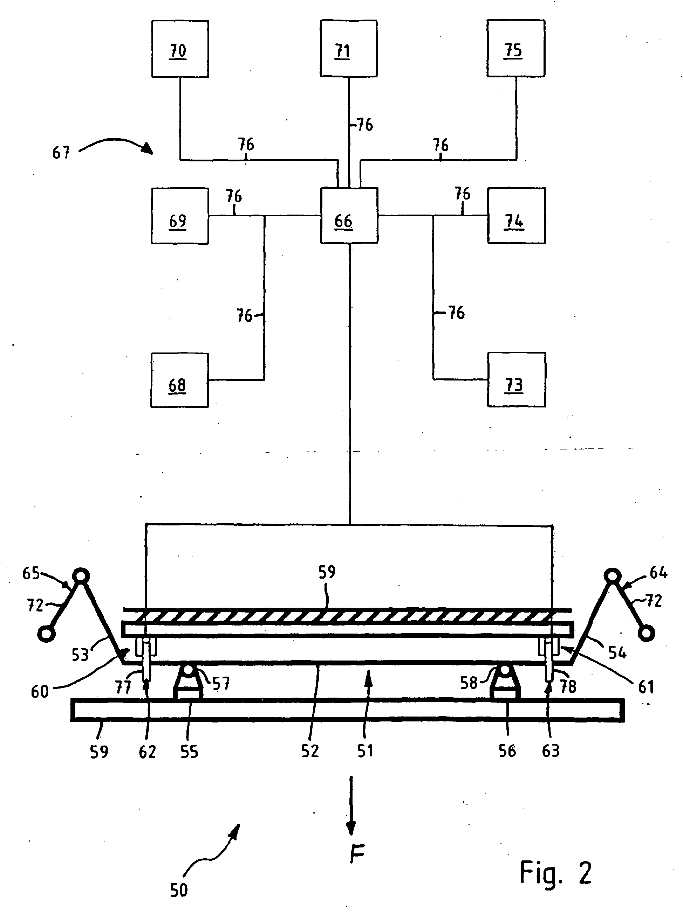

Die Lösung der Aufgabe wird nachfolgend anhand von den Zeichnungen näher erläutert. Hierbei dienen die in den Figuren 1 und 2 gezeigten alternativen Lösungen der Erläuterung des Erfindungsgedankens. Sie ist nicht Gegenstand eines Anspruches. Es zeigen:
- Figur 1: eine Fahrwerksanordnung gemäß einer alternativen Lösung der Aufgabe in einer Ansicht von oben;
- Figur 2: eine Fahrwerksanordnung gemäß einer weiteren alternativen Lösung der Aufgabe in einer Ansicht von oben;
- Figur 3: eine Fahrwerksanordnung gemäß der Lösung der Aufgabe in einer Ansicht von oben;
- Figur 4: eine Bremsscheibe mit mehreren Nuten und
- Figur 5: eine gewichtsreduzierte Bremsscheibe.

In Figur 1 ist eine Fahrwerksanordnung 1 mit einem Stabilisator 2 gemäß einer alternativen Lösung der Aufgabe dargestellt, der mittig in einen ersten Stabilisatorabschnitt 3 und einen zweiten Stabilisatorabschnitt 4 geteilt ist. F kennzeichnet die Fahrtrichtung. Die Stabilisatorabschnitte 3, 4 weisen jeweils einen inneren Teil 5, 6 auf, der torsionsweich ausgeführt ist. An den inneren Teil 5, 6 schließen sich außenseitig Stabilisatorschenkel 7, 8 an, mittels derer der Stabilisator 2 an Radträgereinheiten 9, 10 angebunden ist. Zwischen den einander benachbarten Enden 11, 12 der Stabilisatorabschnitte 3, 4 ist ein Lager 13 angeordnet, über welches die Stabilisatorabschnitte 3, 4 gegeneinander gelagert sind. Das Lager 13 ist als Rollenlager ausgeführt und in einem geeigneten Gehäuse 14 angeordnet, das am Ende 12 des zweiten Stabilisatorabschnitts 4 befestigt ist. Jeder Stabilisatorabschnitt 3, 4 ist über ein Stabilisatorlager 15, 16 gegenüber einem Fahrzeugaufbau 17 abgestützt.

Die Stabilisatorabschnitte 3, 4 sind durch eine Bremsvorrichtung 18 miteinander gekoppelt. Durch die Bremsvorrichtung 18 ist die gegenseitige Verdrehbarkeit der Stabilisatorabschnitte 3, 4 beeinflussbar. Die Bremsvorrichtung 18 ist als Scheibenbremse 19 ausgeführt. Hierbei ist an einem ersten Stabilisatorabschnitt 3 ein Bremssattel 20 mit darin angeordneten Bremsbacken 21 befestigt. Eine Bremsscheibe 22 ist außenseitig am Gehäuse 14 des Lagers 13 angeschweißt und elektromechanisch betätigbar. Die Bremsvorrichtung 18 ist zwischen einem drehfesten Zustand und einem vollständig entkoppelten Zustand stufenlos schaltbar.

Mit der Bremsvorrichtung 18 ist ein Steuergerät 23 gekoppelt. Das Steuergerät 23 ist am Fahrzeugaufbau 17 befestigt und durch den Fahrer vor und während der Fahrt einstellbar, um eine sportliche oder komfortable Fahrwerkscharakteristik zu erzeugen.

Darüber hinaus ist das Steuergerät 23 mit einer Sensorik 24 gekoppelt. Die Sensorik 24 umfasst mehrere Beschleunigungssensoren 25, 26, um Querbeschleunigungen und Beschleunigungen in Fahrtrichtung F des Kraftfahrzeugs zu erfassen. Des Weiteren ist ein Geschwindigkeitssensor 27 vorgesehen zur Erfassung der Fahrtgeschwindigkeit des Kraftfahrzeugs. Ein Fahrbahnzustandssensor 28 erfasst die Neigung, den Haftungsbeiwert und/oder die Temperatur der Fahrbahnoberfläche. Des Weiteren sind den Radträgereinheiten zwei Radträgereinfederungssensoren 29, 30 zugeordnet, die den Einfederungszustand der Radträgereinheiten erfassen. Schließlich ist die Sensorik mit Mitteln 31 zur Erfassung meteorologischer Daten ausgestattet. Diese ermöglichen die Erfassung der Außentemperatur und des Vorhandenseins von Regen. Die Sensoren 25-31 sind über Signalübertragungsleitungen 32 mit dem Steuergerät 23 gekoppelt.

In Figur 2 ist eine Fahrwerksanordnung 50 gemäß einer weiteren alternativen Lösung der Aufgabe dargestellt. Die Fahrwerksanordnung 50 umfasst einen Stabilisator 51, der einen einteilig ausgebildeten Mittelteil 52 und sich an den Mittelteil 52 anschließende Stabilisatorschenkel 53, 54 aufweist. Der Mittelteil 52 ist torsionsweich ausgeführt und über zwei Stabilisatorlager 55, 56 mit Wälzlagern 57, 58 gegenüber einem Fahrzeugaufbau 59 abgestützt.

Am Mittelteil 52 sind zwei Bremsvorrichtungen 60, 61 lösbar befestigt, durch welche die Tordierbarkeit des Mittelteils 52 beeinflussbar ist. Die Bremsvorrichtungen 60, 61 sind gegenüber dem Fahrzeugaufbau 59 abgestützt und als Scheibenbremsen 62, 63 ausgeführt. Je eine Bremsvorrichtung 60, 61 ist zwischen einem Stabilisatorlager 55, 56 und einem angrenzenden Stabilisatorschenkel 53, 54 angeordnet. Die Bremsvorrichtungen 60, 61 sind unabhängig voneinander betätigbar, so dass eine individuelle Regelung der linken und der rechten Seite 64, 65 der Fahrwerksanordnung 50 möglich ist. Die elektromechanisch betätigbare Bremsvorrichtung 60, 61 ist zwischen einem drehfesten und einem vollständig entkoppelten Zustand stufenlos schaltbar.

Mit den Bremsvorrichtungen 60, 61 ist ein Steuergerät 66 gekoppelt. Das Steuergerät 66 ist durch den Fahrer vor oder während der Fahrt einstellbar, um die Charakteristik des Fahrwerks beispielsweise zwischen sportlich und komfortabel einstellen zu können.

Mit den Bremsvorrichtungen und den Mitteln zum Beeinflussen der gegenseitigen Verdrehbarkeit der Stabilisatorabschnitte ist ein Steuergerät gekoppelt. Das Steuergerät ist durch den Fahrer durch oder während der Fahrt einstellbar, um die Charakteristik des Fahrwerks beispielsweise zwischen sportlich und komfortabel einstellen zu können.

Des Weiteren ist das Steuergerät 66 mit einer Sensorik 67 in Form mehrerer Sensoren 68-71, 73-75 gekoppelt. Die Sensorik 67 weist wenigstens zwei Beschleunigungssensoren 68, 69 zur Erfassung der Querbeschleunigung des Kraftfahrzeugs und der Beschleunigung in Fahrtrichtung F auf. Des Weiteren ist zur Erfassung der Geschwindigkeit des Fahrzeugs ein Geschwindigkeitssensor 70 vorgesehen. Die Sensorik 67 weist darüber hinaus einen Fahrbahnzustandssensor 71 auf, der den Haftungsbeiwert und/oder die Temperatur der Fahrbahn erfasst. Jeder Radträgereinheit 72 der Fahrwerksanordnung 50 ist ein Radträgereinfederungsensor 73, 74 zugeordnet. Schließlich umfasst die Sensorik 67 auch Mittel 75 zur Erfassung meteorologischer Daten, wie die Außentemperatur und dem Niederschlag. Alle genannten Sensoren 68-71, 73-75 sind über geeignete Signalübertragungsleitungen 76 an das Steuergerät 66 angeschlossen.

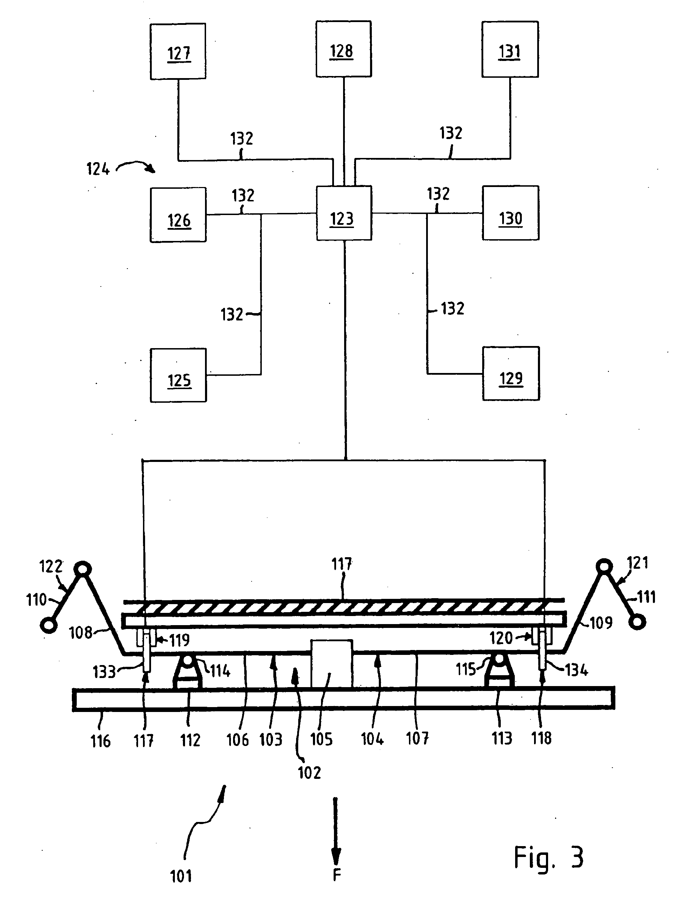

In Figur 3 ist eine erfindungsgemäße Fahrwerksanordnung 101 mit einem Stabilisator 102 dargestellt, der mittig in einen ersten Stabilisatorabschnitt 103 und einen zweiten Stabilisatorabschnitt 104 geteilt ist. Die Stabilisatorabschnitte 103, 104 sind durch Mittel 105 zur Beeinflussung der gegenseitigen Verdrehbarkeit der Stabilisatorabschnitte 103, 104 miteinander gekoppelt. F kennzeichnet die Fahrtrichtung. Die Stabilisatorabschnitte 103, 104 weisen jeweils einen inneren Teil 106, 107 auf, der torsionsweich ausgeführt ist. An den inneren Teil 106, 107 schließen sich außenseitig Stabilisatorschenkel 108, 109 an, mittels derer der Stabilisator 102 an Radträgereinheiten 110, 111 angebunden ist. Die Stabilisatorabschnitte 103, 104 sind jeweils über ein Stabilisatorlager 112, 113 mit Wälzlagern 114, 115 gegenüber dem Fahrzeugaufbau 116 abgestützt.

Zusätzlich zu den Mitteln 105 zum Beeinflussen der gegenseitigen Verdrehbarkeit der Stabilisatorabschnitte 103, 104 ist an jedem Stabilisatorabschnitt 103, 104 eine Bremsvorrichtung 117, 118 befestigt, durch welche die Tordierbarkeit des jeweiligen Stabilisatorabschnitts 103, 104 beeinflussbar ist. Die Bremsvorrichtungen 117, 118 sind gegenüber dem Fahrzeugaufbau 116 abgestützt und als Scheibenbremsen 119, 120 ausgeführt. Jede Bremsvorrichtung 117, 118 ist zwischen einem Stabilisatorlager 112, 113 und einem angrenzenden Stabilisatorschenkel 108, 109 angeordnet. Die Bremsvorrichtungen 117, 118 sind unabhängig voneinander betätigbar, so dass eine individuelle Regelung der linken und der rechten Seite 121, 122 der Fahrwerksanordnung 101 möglich ist. Die elektromechanisch betätigbaren Bremsvorrichtungen 117, 118 sind zwischen einem drehfesten und einem vollständig entkoppelten Zustand stufenlos schaltbar.

Mit den Bremsvorrichtungen 117, 118 und den Mitteln 105 zum Beeinflussen der gegenseitigen Verdrehbarkeit der Stabilisatorabschnitte 103, 104 ist ein Steuergerät 123 gekoppelt. Das Steuergerät 123 ist durch den Fahrer durch oder während der Fahrt einstellbar, um die Charakteristik des Fahrwerks beispielsweise zwischen sportlich und komfortabel einstellen zu können.

Des Weiteren ist das Steuergerät 123 mit einer Sensorik 124 in Form mehrerer Sensoren 125-131 gekoppelt. Die Sensorik 124 weist wenigstens zwei Beschleunigungssensoren 125, 126 zur Erfassung der Querbeschleunigung des Kraftfahrzeugs und der Beschleunigung in Fahrtrichtung F auf. Des Weiteren ist zur Erfassung der Geschwindigkeit des Fahrzeugs ein Geschwindigkeitssensor 127 vorgesehen. Die Sensorik 124 weist darüber hinaus einen Fahrbahnzustandssensor 128 auf, der den Haftungsbeiwert und/oder die Temperatur der Fahrbahn erfasst. Jeder Radträgereinheit 110, 112 der Fahrwerksanordnung 101 ist ein Radträgereinfederungsensor 129, 130 zugeordnet. Schließlich umfasst die Sensorik 124 auch Mittel 131 zur Erfassung meteorologischer Daten, wie der Außentemperatur und des Niederschlags. Alle genannten Sensoren 125-131 sind über geeignete Signalübertragungsleitungen 132 an das Steuergerät 123 angeschlossen.

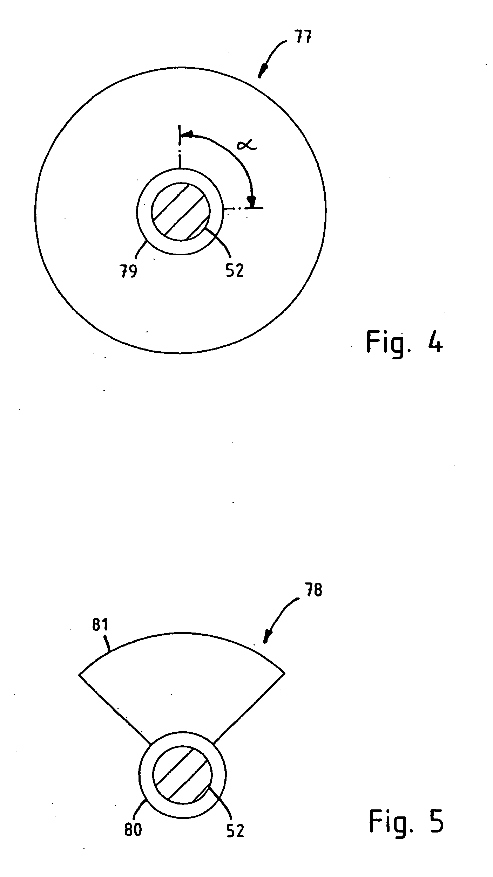

Die Bremsvorrichtungen 60, 61, 117, 118 der zweiten und dritten Lösung der Aufgabe sind als Scheibenbremsen 62, 63, 119, 120 ausgeführt. Die Bremsscheiben 77, 78, 133, 134 sind hierbei lösbar über eine Nabe 79, 80 am Mittelteil 52 oder an den Stabilisatorabschnitten 103, 104 befestigt (vgl. zum Folgenden auch Fig. 4 und 5). Die Bremsscheibe 77 kann in mehreren um einen Winkel α in Umfangsrichtung der Bremsscheibe 77 verdrehten Position am Mittelteil 52 befestigt werden. Eine weitere Ausführungsform der Bremsscheibe 78 ist in Figur 5 dargestellt. Zur Gewichtsreduktion ist an einer Nabe 80 ein Bremsbereich 81 in Form eines Kreisringstücks anstelle eines vollständigen Kreisrings angeordnet.

Mit den Fahrwerksanordnungen 1, 50, 101 wird eine aktive Veränderung der Aufbauschwingung durch gezieltes Abbremsen mit geeignet platzierten Bremsvorrichtungen 18, 60, 61, 117, 118 ermöglicht. Mithin ist die Tordierbarkeit des Stabilisators 2, 51, 102 auf einfache Weise beeinflussbar. Dämpfer, die den einzelnen Radträgereinheiten 9, 10, 72, 110, 111 üblicherweise zugeordnet sind, können eingespart werden. Ein weiterer Vorteil ist, dass die Ausführungsformen gemäß der ersten, zweiten oder dritten Lösung der Aufgabe kostengünstiger als bekannte und am Markt erhältliche Systeme sind. Sie zeichnen sich darüber hinaus dadurch aus, dass sie ein geringeres Gewicht haben. Letztlich ist auch der Energieaufwand zur Bewirkung der Regelungsleistung erheblich geringer.

### Bezugszeichen:

- 1 -: Fahrwerksanordnung
- 2 -: Stabilisator
- 3 -: erster Stabilisatorabschnitt
- 4 -: zweiter Stabilisatorabschnitt
- 5 -: innerer Teil v. 3
- 6 -: innerer Teil v. 4
- 7 -: Stabilisatorschenkel
- 8 -: Stabilisatorschenkel
- 9 -: Radträgereinheit
- 10 -: Radträgereinheit
- 11 -: Ende v. 3
- 12 -: Ende 4.
- 13 -: Lager
- 14 -: Gehäuse
- 15 -: Stabilisatorlager
- 16 -: Stabilisatorlager
- 17-: Fahrzeugaufbau
- 18 -: Bremsvorrichtung
- 19 -: Scheibenbremse
- 20 -: Bremssattel
- 21 -: Bremsbacken
- 22 -: Bremsscheibe
- 23 -: Steuergerät
- 24 -: Sensorik
- 25 -: Beschleunigungssensor
- 26 -: Beschleunigungssensor
- 27 -: Geschwindigkeitssensor
- 28 -: Fahrbahnzustandssensor
- 29 -: Radträgereinfederungssensor
- 30 -: Radträgereinfederungssensor
- 31 -: Mittel zur Erfassung meteorologischer Daten
- 32 -: Signalübertragungsleitung

- 50 -: Fahrwerksanordnung
- 51 -: Stabilisator
- 52 -: Mittelteil
- 53 -: Stabilisatorschenkel
- 54 -: Stabilisatorschenkel
- 55 -: Stabilisatorlager
- 56 -: Stabilisatorlager
- 57 -: Wälzlager v. 55
- 58 -: Wälzlager v. 56
- 59 -: Fahrzeugaufbau
- 60 -: Bremsvorrichtung
- 61 -: Bremsvorrichtung
- 62 -: Scheibenbremse v. 60
- 63 -: Scheibenbremse v. 61
- 64 -: linke Seite v. 50
- 65 -: rechte Seite v. 50
- 66 -: Steuergerät
- 67 -: Sensorik
- 68 -: Beschleunigungssensor
- 69 -: Beschleunigungssensor
- 70 -: Geschwindigkeitssensor
- 71 -: Fahrbahnzustandssensor
- 72 -: Radträgereinheit
- 73 -: Radträgereinfederungssensor
- 74 -: Radträgereinfederungssensor
- 75 -: Mittel zur Erfassung meteorologischer Daten
- 76 -: Signalübertragungsleitung
- 77 -: Bremsscheibe
- 78 -: Bremsscheibe
- 79 -: Nabe
- 80 -: Nabe
- 81 -: Bremsbereich

- 101 -: Fahrwerksanordnung
- 102 -: Stabilisator
- 103 -: erster Stabilisatorabschnitt
- 104 -: zweiter Stabilisatorabschnitt
- 105-: Mittel zur Beeinflussung der gegenseitigen Verdrehbarkeit der Stabilisatorabschnitte 103, 104
- 106 -: innerer Teil von 103
- 107 -: innerer Teil von 104
- 108 -: Stabilisatorschenkel
- 109 -: Stabilisatorschenkel
- 110 -: Radträgereinheit
- 111 -: Radträgereinheit
- 112 -: Stabilisatorlager
- 113 -: Stabilisatorlager
- 114 -: Wälzlager
- 115 -: Wälzlager
- 116 -: Fahrzeugaufbau
- 117 -: Bremsvorrichtung
- 118 -: Bremsvorrichtung
- 119 -: Scheibenbremse
- 120 -: Scheibenbremse
- 121 -: linke Seite v. 101
- 122 -: rechte Seite v. 101
- 123 -: Steuergerät
- 124 -: Sensorik
- 125 -: Beschleunigungssensor
- 126 -: Beschleunigungssensor
- 127 -: Geschwindigkeitssensor
- 128 -: Fahrbahnzustandsensor
- 129 -: Radträgereinfederungssensor
- 130 -: Radträgereinfederungssensor
- 131 -: Mittel zur Erfassung meteorologischer Daten
- 132 -: Signalübertragungsleitungen
- 133 -: Bremsscheibe
- 134 -: Bremsscheibe

- α -: Winkel
- F -: Fahrtrichtung

## Patentansprüche

1. Fahrwerksanordnung mit einem Stabilisator (102), der mittig in einen ersten Stabilisatorabschnitt (103) und einen zweiten Stabilisatorabschnitt (104) geteilt ist, wobei die Stabilisatorabschnitte (103, 104) durch Mittel (105) zum Beeinflussen der gegenseitigen Verdrehbarkeit der Stabilisatorabschnitte (103, 104) miteinander gekoppelt sind und jeder Stabilisatorabschnitt (103, 104) über ein Stabilisatorlager (112, 113) gegenüber einem Fahrzeugaufbau (116) abgestützt ist, **dadurch gekennzeichnet, dass** zusätzlich zu den Mitteln (105) zum Beeinflussen der gegenseitigen Verdrehbarkeit der Stabilisatorabschnitte (103, 104) an jedem Stabilisatorabschnitt (103, 104) eine Bremsvorrichtung (117, 118) befestigt ist, durch welche die Tordierbarkeit des jeweiligen Stabilisatorabschnitts (103, 104) beeinflussbar ist.

2. Fahrwerksanordnung nach Anspruch 1, **dadurch gekennzeichnet, dass** die Bremsvorrichtungen (117, 118) jeweils zwischen einem Stabilisatorlager (112, 113) und einem angrenzenden Stabilisatorschenkel (108, 109) angeordnet sind.

3. Fahrwerksanordnung nach Anspruch 1, **dadurch gekennzeichnet, dass** die Bremsvorrichtungen jeweils zwischen einem Stabilisatorlager und den Mitteln zum Beeinflussen der gegenseitigen Verdrehbarkeit der Stabilisatorabschnitte angeordnet sind.

4. Fahrwerksanordnung nach einem der Ansprüche 1 bis 3, **dadurch gekennzeichnet, dass** zumindest eine Bremsvorrichtung (117, 118) eine Scheibenbremse (119, 120) ist.

5. Fahrwerksanordnung nach einem der Ansprüche 1 bis 4, **dadurch gekennzeichnet, dass** zumindest eine Scheibenbremse (119, 120) eine Bremsscheibe 133, 134) aufweist, die lösbar an einem Stabilisatorabschnitt (103, 104) befestigt ist.

6. Fahrwerksanordnung nach Anspruch 5, **dadurch gekennzeichnet, dass** die Bremsscheibe (133, 134) in mehreren um einen Winkel (α) in Umfangsrichtung der Bremsscheibe (133, 134) verdrehten Positionen am Stabilisatorabschnitt (103, 104) befestigbar ist.

7. Fahrwerksanordnung nach Anspruch 5 oder 6, **dadurch gekennzeichnet, dass** die Bremsscheibe (78) einen Bremsbereich (81) in Form eines Kreisringstücks aufweist.

8. Fahrwerksanordnung nach einem der Ansprüche 1 bis 7, **dadurch gekennzeichnet, dass** die Bremsvorrichtungen (117, 118) unabhängig voneinander betätigbar sind.

9. Fahrwerksanordnung nach einem der Ansprüche 1 bis 8, **dadurch gekennzeichnet, dass** zumindest eine Bremsvorrichtung (117, 118) zwischen einem drehfesten Zustand und einem vollständig entkoppelten Zustand stufenlos schaltbar ist.

10. Fahrwerksanordnung nach einem der Ansprüche 1 bis 8, **dadurch gekennzeichnet, dass** zumindest eine Bremsvorrichtung (117, 118) zwischen einem drehfesten Zustand und einem vollständig entkoppelten Zustand in mehreren Stufen schaltbar ist.

11. Fahrwerksanordnung nach einem der Ansprüche 1 bis 10, **dadurch gekennzeichnet, dass** zumindest eine Bremsvorrichtung (117, 118) elektromechanisch betätigbar ist.

12. Fahrwerksanordnung nach einem der Ansprüche 1 bis 10, **dadurch gekennzeichnet, dass** zumindest eine Bremsvorrichtung (117, 118) hydraulisch betätigbar ist.

13. Fahrwerksanordnung nach einem der Ansprüche 1 bis 12, **dadurch gekennzeichnet, dass** zumindest eine Bremsvorrichtung eine Wirbelstrombremse ist.

14. Fahrwerksanordnung nach einem der Ansprüche 1 bis 13, **dadurch gekennzeichnet, dass** zumindest eine Bremsvorrichtung (117, 118) gegenüber einem Fahrzeugaufbau (116) abgestützt ist.

15. Fahrwerksanordnung nach einem der Ansprüche 1 bis 14, **dadurch gekennzeichnet, dass** zumindest eine Bremsvorrichtung gegenüber einem Fahrschemel abgestützt ist.

16. Fahrwerksanordnung nach einem der Ansprüche 1 bis 15, **dadurch gekennzeichnet, dass** ein Steuergerät (123) vorgesehen ist, das mit zumindest einer Bremsvorrichtung (117, 118) und/oder den Mitteln (105) zum Beeinflussen der gegenseitigen Verdrehbarkeit der Stabilisatorabschnitte gekoppelt ist.

17. Fahrwerksanordnung nach Anspruch 16, **dadurch gekennzeichnet, dass** das Steuergerät (123) durch den Fahrer eines mit der Fahrwerksanordnung ausgestatteten Kraftfahrzeuges einstellbar ist.

18. Fahrwerksanordnung nach Anspruch 16 oder 17, **dadurch gekennzeichnet, dass** das Steuergerät (123) mit einer Sensorik (124) gekoppelt ist.

19. Fahrwerksanordnung nach Anspruch 18, **dadurch gekennzeichnet, dass** die Sensorik (124) zumindest einen Beschleunigungssensor (125, 126) umfasst.

20. Fahrwerksanordnung nach Anspruch 19, **dadurch gekennzeichnet, dass** mehrere Beschleunigungssensoren (125, 126) vorgesehen sind, die Beschleunigungen in unterschiedliche Wirkrichtungen erfassen.

21. Fahrwerksanordnung nach einem der Ansprüche 18 bis 20, **dadurch gekennzeichnet, dass** die Sensorik (124) einen Geschwindigkeitssensor (127) umfasst.

22. Fahrwerksanordnung nach einem der Ansprüche 18 bis 21, **dadurch gekennzeichnet, dass** die Sensorik (124) einen Fahrbahnzustandssensor (128) umfasst.

23. Fahrwerksanordnung nach einem der Ansprüche 18 bis 22, **dadurch gekennzeichnet, dass** die Sensorik (124) zumindest einen Radträgereinfederungssensor (129, 130) umfasst.

24. Fahrwerksanordnung nach einem der Ansprüche 18 bis 23, **dadurch gekennzeichnet, dass** die Sensorik (124) Mittel (131) zur Erfassung meteorologischer Daten umfasst.

## Claims

1. Chassis arrangement, comprising a stabiliser (102) centrally divided into a first stabiliser portion (103) and a second stabiliser portion (104), the stabiliser portions (103,104) being coupled by means (105) for influencing the relative rotation between the stabiliser portions (103,104) and each stabiliser portion (103,104) being supported in relation to a vehicle body (116) by means of a stabiliser bearing (112, 113), **characterised in that** in addition to the means (105) for influencing the relative rotation between the stabiliser portions (103,104), a brake device (117, 118) is fixed to each stabiliser portion (103,104) by which the torsional flexibility of the respective stabiliser portion (103,104) can be influenced.

2. Chassis arrangement according to claim 1, **characterised in that** the brake devices (117, 118) are each arranged between a stabiliser bearing (112, 113) and an adjacent stabiliser limb (108, 109).

3. Chassis arrangement according to claim 1, **characterised in that** the brake devices are each arranged between a stabiliser bearing and the means for influencing the relative rotation between the stabiliser portions.

4. Chassis arrangement according to one of claims 1 to 3, **characterised in that** at least one brake device (117, 118) is a disc brake (119, 120).

5. Chassis arrangement according to one of claims 1 to 4, **characterised in that** at least one disc brake (119, 120) has a brake disc (133, 134) which is detachably secured to a stabiliser portion (103,104).

6. Chassis arrangement according to claim 5, **characterised in that** the brake disc (133, 134) can be secured to the stabiliser portion (103,104) in several positions rotated by an angle (α) in the circumferential direction of the brake disc (133, 134).

7. Chassis arrangement according to claim 5 or 6, **characterised in that** the brake disc (78) has a brake zone (81) in the form of a ring segment.

8. Chassis arrangement according to one of claims 1 to 7, **characterised in that** the brake devices (117, 118) can be operated independently of each other.

9. Chassis arrangement according to one of claims 1 to 8, **characterised in that** at least one brake device (117, 118) can be continuously adjusted between a rotationally fixed state and a fully disengaged state.

10. Chassis arrangement according to one of claims 1 to 8, **characterised in that** at least one brake device (117, 118) can be adjusted between a rotationally fixed state and a fully disengaged state in multiple stages.

11. Chassis arrangement according to one of claims 1 to 10, **characterised in that** at least one brake device (117, 118) can be operated electromechanically.

12. Chassis arrangement according to one of claims 1 to 10, **characterised in that** at least one brake device (117, 118) can be operated hydraulically.

13. Chassis arrangement according to one of claims 1 to 12, **characterised in that** at least one brake device (117, 118) is an eddy current brake.

14. Chassis arrangement according to one of claims 1 to 13, **characterised in that** at least one brake device (117, 118) is supported in relation to a vehicle body.

15. Chassis arrangement according to one of claims 1 to 14, **characterised in that** at least one brake device is supported in relation to a vehicle subframe.

16. Chassis arrangement according to one of claims 1 to 15, **characterised in that** a control device (123) is provided, which is coupled with at least one brake device (117, 118) and/or the means (105) for influencing the relative rotation between the stabiliser portions (103,104).

17. Chassis arrangement according to claim 16, **characterised in that** the control device (123) is adjustable by the driver of a motor vehicle equipped with the chassis arrangement.

18. Chassis arrangement according to claim 16 or 17, **characterised in that** the control device (123) is coupled with a sensor assembly (124).

19. Chassis arrangement according to claim 18, **characterised in that** the sensor assembly (124) includes at least one acceleration sensor (125, 126).

20. Chassis arrangement according to claim 19, **characterised in that** a plurality of acceleration sensors (125, 126) are provided to detect accelerations in different directions of action.

21. Chassis arrangement according to one of claims 18 to 20, **characterised in that** the sensor assembly (124) includes a speed sensor (127).

22. Chassis arrangement according to one of claims 18 to 21, **characterised in that** the sensor assembly (124) includes a sensor (128) for ascertaining the condition of a road surface.

23. Chassis arrangement according to one of claims 18 to 22, **characterised in that** the sensor assembly (124) includes at least one wheel support spring deflection sensor (129, 130).

24. Chassis arrangement according to one of claims 18 to 23, **characterised in that** the sensor assembly (124) includes means (131) for ascertaining meteorological data.

## Revendications

1. Agencement formant train de roulement, comprenant un stabilisateur (102), qui est subdivisé au milieu en un premier tronçon de stabilisateur (103) et en un second tronçon de stabilisateur (104), dans lequel les tronçons de stabilisateur (103, 104) sont couplés l'un à l'autre par des moyens (105) destinés à influencer la faculté de rotation réciproque des tronçons de stabilisateur (103, 104), et chaque tronçon de stabilisateur (103, 104) est soutenu par rapport à une superstructure de véhicule (116) par un palier de stabilisateur (112, 113), **caractérisé en ce que**, en supplément aux moyens (105) destinés à influencer la faculté de rotation réciproque des tronçons de stabilisateur (103, 104), un dispositif de freinage (117, 118) est fixé sur chaque tronçon de stabilisateur (103, 104), dispositif au moyen duquel la faculté de torsion du tronçon de stabilisateur respectif (103, 104) peut être influencée.

2. Agencement formant train de roulement selon la revendication 1, **caractérisé en ce que** les dispositifs de freinage (117, 118) sont agencés respectivement entre un palier de stabilisateur (112, 113) et un bras de stabilisateur adjacent (108, 109).

3. Agencement formant train de roulement selon la revendication 1, **caractérisé en ce que** les dispositifs de freinage sont agencés respectivement entre un palier de stabilisateur et les moyens destinés à influencer la faculté de rotation réciproque des tronçons de stabilisateur.

4. Agencement formant train de roulement selon l'une des revendications 1 à 3, **caractérisé en ce qu'**au moins un dispositif de freinage (117, 118) est un frein à disque (119, 120).

5. Agencement formant train de roulement selon l'une des revendications 1 à 4, **caractérisé en ce qu'**au moins un frein à disque (119, 120) comprend un disque de frein (133, 134), lequel est fixé de façon détachable sur un tronçon de stabilisateur (103, 104).

6. Agencement formant train de roulement selon la revendication 5, **caractérisé en ce que** le disque de frein (133, 134) est susceptible d'être fixé sur le tronçon de stabilisateur (103, 104) en plusieurs positions tournées d'un angle (α) en direction périphérique du disque de frein (133, 134).

7. Agencement formant train de roulement selon la revendication 5 ou 6, **caractérisé en ce que** le disque de frein (78) comporte une zone de freinage (81) sous la forme d'un morceau d'anneau circulaire.

8. Agencement formant train de roulement selon l'une des revendications 1 à 7, **caractérisé en ce que** les dispositifs de freinage (117, 118) peuvent être actionnés indépendamment les uns des autres.

9. Agencement formant train de roulement selon l'une des revendications 1 à 8, **caractérisé en ce qu'**au moins un dispositif de freinage (117, 118) est susceptible d'être actionné en continu entre un état solidaire en rotation et un état totalement découplé.

10. Agencement formant train de roulement selon l'une des revendications 1 à 8, **caractérisé en ce qu'**au moins un dispositif de freinage (117, 118) est susceptible d'être actionné en plusieurs gradins entre un état solidaire en rotation et un état totalement découplé.

11. Agencement formant train de roulement selon l'une des revendications 1 à 10, **caractérisé en ce qu'**au moins un dispositif de freinage (117, 118) est susceptible d'être actionné par voie électromécanique.

12. Agencement formant train de roulement selon l'une des revendications 1 à 10, **caractérisé en ce qu'**au moins un dispositif de freinage (117, 118) est susceptible d'être actionné par voie hydraulique.

13. Agencement formant train de roulement selon l'une des revendications 1 à 12, **caractérisé en ce qu'**au moins un dispositif de freinage est un frein à un courant de Foucault.

14. Agencement formant train de roulement selon l'une des revendications 1 à 13, **caractérisé en ce qu'**au moins un dispositif de freinage (117, 118) est soutenu par rapport à une superstructure de véhicule (118).

15. Agencement formant train de roulement selon l'une des revendications 1 à 14, **caractérisé en ce qu'**au moins un dispositif de freinage est soutenu par rapport à un berceau d'essieu.

16. Agencement formant train de roulement selon l'une des revendications 1 à 15, **caractérisé en ce qu'**il est prévu un appareil de commande (123) qui est couplé à au moins un dispositif de freinage (117, 118) et/ou aux moyens (105) destinés à influencer la faculté de rotation réciproque des tronçons de stabilisateur.

17. Agencement formant train de roulement selon la revendication 16, **caractérisé en ce que** l'appareil de commande (123) est réglable par le conducteur d'un véhicule automobile équipé de l'agencement formant train de roulement.

18. Agencement formant train de roulement selon la revendication 16 ou 17, **caractérisé en ce que** l'appareil de commande (123) est couplé à un système de capteurs (124).

19. Agencement formant train de roulement selon la revendication 18, **caractérisé en ce que** le système de capteurs (124) comprend au moins un capteur d'accélération (125, 126).

20. Agencement formant train de roulement selon la revendication 19, **caractérisé en ce qu'**il est prévu plusieurs capteurs d'accélération (125, 126) qui détectent les accélérations dans des directions efficaces différentes.

21. Agencement formant train de roulement selon l'une des revendications 18 à 20, **caractérisé en ce que** le système de capteurs (124) comprend un capteur de vitesse (127).

22. Agencement formant train de roulement selon l'une des revendications 18 à 21, **caractérisé en ce que** le système de capteurs (124) comprend un capteur (128) pour l'état de la chaussée.

23. Agencement formant train de roulement selon l'une des revendications 18 à 22, **caractérisé en ce que** le système de capteurs (124) comprend au moins un capteur (129, 130) du débattement du support de roues.

24. Agencement formant train de roulement selon l'une des revendications 18 à 23, **caractérisé en ce que** le système de capteurs (124) comprend des moyens (131) pour la saisie de données météorologiques.
